(19) Europäisches Patentamt
European Patent Office
Office européen des brevets

(11) Veröffentlichungsnummer: **0 073 950**
**B1**

(12) # EUROPÄISCHE PATENTSCHRIFT

(45) Veröffentlichungstag der Patentschrift: **15.10.86**

(51) Int. Cl.⁴: **C 09 B 45/24** // C09B33/04, D06P1/10

(21) Anmeldenummer: **82107342.6**

(22) Anmeldetag: **13.08.82**

(54) **Saure Metallkomplexfarbstoffe.**

(30) Priorität: **25.08.81 DE 3133506**

(43) Veröffentlichungstag der Anmeldung: **16.03.83 Patentblatt 83/11**

(45) Bekanntmachung des Hinweises auf die Patenterteilung: **15.10.86 Patentblatt 86/42**

(84) Benannte Vertragsstaaten: **CH DE FR GB IT LI**

(56) Entgegenhaltungen:
**DE-C-670 935**
**US-A-2 200 445**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Mennicke, Winfried, Dr., Steglitzer Strasse 8, D-5090 Leverkusen 1 (DE)**

EP 0 073 950 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

1. Die vorliegende Erfindung betrifft wasserlösliche Eisen-, Nickel-, Kobalt- oder Kupferkomplexe sowie deren Mischmetallkomplexe von an beiden Azogruppen metallisierbaren Disazofarbstoffen der Formel

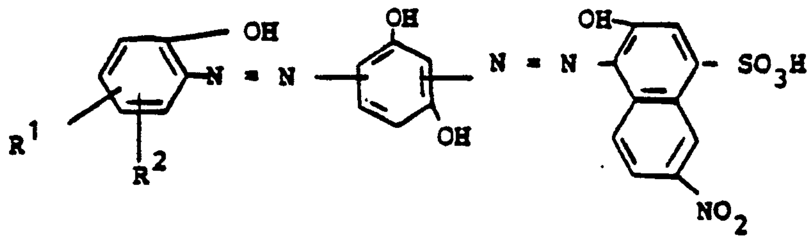

(I)

worin
$R^1$ Wasserstoff, $NO_2$ oder Acylamino und
$R^2$ Wasserstoff, Cl, Alkyl, Alkoxy, Sulfamoyl, Alkylsulfonyl, Arylsulfonyl, Acylamino oder $SO_3H$
bedeuten, wobei die genannten Sulfamoyl-, Alkyl-, Alkoxy- und Arylreste in der Chemie der Komplexfarbstoffe übliche Substituenten tragen können.

Vorzugsweise stehen $R^2$ für Cl, Alkyl, Alkoxy oder insbesondere Wasserstoff, wenn $R^1$ Acylamino bedeutet.

Geeignete in beliebigem Zusammenhang genannte Alkyl- und Alkoxygruppen sind solche mit 1—4 C-Atomen, die gegebenenfalls weiter substituiert sein können, beispielsweise durch CN, Cl, OH, $C_1$—$C_4$-Alkoxy oder Phenyl. Bevorzugt sind Methyl, Ethyl und Ethoxy.

Geeignete Acylaminogruppen sind insbesondere $C_1$—$C_4$-Alkylcarbonylamino, $C_1$—$C_4$-Alkoxycarbonylamino, $C_1$—$C_4$-Alkylsulfonylamino. Bevorzugt sind Acetylamino und $C_1$—$C_2$-Alkylsulfonylamino.

Der Sulfamoylrest $R_2$ kann mono- oder disubstituiert sein, beispielsweise durch gegebenenfalls substituiertes $C_1$—$C_4$-Alkyl oder durch Aryl, insbesondere gegebenenfalls substituiertes Phenyl. Vorzugsweise ist der Sulfamoylrest $R_2$ nicht oder durch zwei $C_1$—$C_2$-Alkylreste substituiert.

Geeignete Arylreste sind insbesondere gegebenenfalls durch Halogen, (vorzugsweise Cl und Br), $NO_2$, $C_1$—$C_4$-Alkoxy oder $C_1$—$C_4$-Alkyl substituierte Phenylreste. Bevorzugt sind Phenyl und Tolyl.

Bevorzugte Metall- und Mischmetallkomplexe sind solche, denen die Farbstoffe der Formel (II) zugrunde liegen:

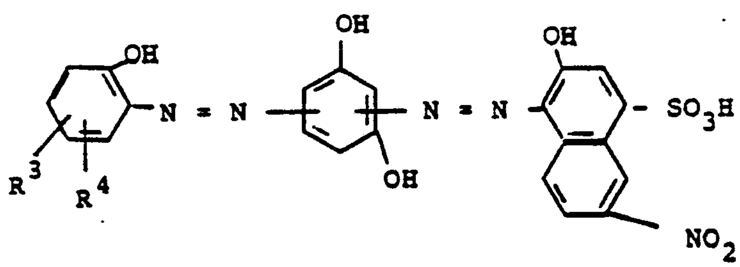

(II)

worin
$R^3$ Wasserstoff, $CH_3CONH$ oder $NO_2$ und
$R^4$ Wasserstoff, Cl, $CH_3$, $OCH_3$, $SO_3H$, $CH_3CONH$, $SO_2NH_2$, $C_1$—$C_2$-Alkylsulfonyl oder $(C_1$—$C_2$-Alkyl$)_2$-Sulfamoyl bedeuten, wobei $R^4$ für Wasserstoff steht, wenn $R^3$ $CH_3CONH$ bedeutet.

Vorzugsweise steht $R^4$ für H oder Cl.

Bevorzugte Kombinationen von Metallen in Mischkomplexen sind solche von Eisen oder Kobalt mit jeweils Kupfer oder Nickel sowie solche von Nickel oder Kupfer mit Chrom.

Die erfindungsgemäßen Farbstoffe (I) können in an sich bekannter Weise (vgl. DE 670 935 und 707 225) dadurch hergestellt werden, daß man Resorcin in beliebiger Reihenfolge mit einem Mol diazotierter 1-Amino-2-hydroxy-6-nitronaphthalin-4-sulfonsäure und einem Mol eines diazotierten Amins

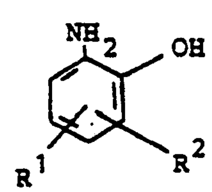

(III)

kuppelt und anschließend den erhaltenen Disazofarbstoff ein- oder zweimal metallisiert.

Geeignete Amine (III) sind beispielsweise:
2-Amino-1-hydroxybenzol,
4-Chlor-2-amino-1-hydroxybenzol,
4- oder 5-Nitro-2-amino-1-hydroxybenzol,
4-Chlor-6-nitro-2-amino-1-hydroxybenzol,
6-Chlor-4-nitro-2-amino-1-hydroxybenzol,
4-Methyl-6-nitro-2-amino-1-hydroxybenzol,
6-Methyl-4-nitro-2-amino-1-hydroxybenzol,
4-Chlor- oder 4-Nitro-6-acetylamino-2-amino-1-hydroxybenzol,
4-Acetylamino-6-nitro-2-amino-1-hydroxybenzol,
4-Methoxy-2-amino-1-hydroxybenzol,
2-Amino-1-hydroxybenzol-4- oder -5-methylsulfon,
2-Amino-1-hydroxybenzol-4- oder -5-phenylsulfon,
5-Nitro- oder 6-Nitro-2-amino-1-hydroxybenzol-4-methylsulfon,
2-Amino-1-hydroxybenzol-4- oder -4-sulfonamid,
2-Amino-1-hydroxybenzol-4- oder -5-methylsulfonamid,
2-Amino-1-hydroxybenzol-4- oder -5-dimethylsulfonamid,
2-Amino-1-hydroxybenzol-4- oder -5-phenylsulfonamid,
4-Methyl-2-amino-1-hydroxybenzol,
4-Chlor-5-nitro-2-amino-1-hydroxybenzol,
4-Nitro-2-amino-1-hydroxybenzol-6-sulfonamid,
2-Amino-1-hydroxybenzol-4- oder -5-sulfonsäure,
4-Nitro-2-amino-1-hydroxybenzol-6-sulfonsäure,
5-Nitro- oder 6-Nitro-2-amino-1-hydroxybenzol-4-sulfonsäure.

Die Metallisierung erfolgt in an sich bekannter Weise in wäßrigem oder wäßrig-organischem Milieu bei Temperaturen von 20—100°C, vorzugsweise bei 70—100°C, unter Normaldruck bei einem pH von 3—12, vorzugsweise 4—10.

Als Lösungsmittel können niedere Alkohole wie Ethanol, Carbonamide wie Formamid oder Dimethylformamid, Ethylenglykol oder dessen Mono-$C_1$—$C_4$-Alkylether zugesetzt werden. Geeignete metallabgebende Mittel sind hauptsächlich die Chrom-, Eisen-, Kobalt-, Kupfer- und Nickelsalze von anorganischen oder organischen Säuren.

Als chromabgebende Mittel kommen beispielsweise Chromtrioxid, Chromfluorid, Chromchlorid, Chromsulfat, Chromformiat, Chromacetat, Kalium- oder Ammoniumchromsulfat, Chromsalicylsäure oder Natrium- oder Kaliumchromat bzw. -bichromat in Frage. Die Chromierung findet vorzugsweise in schwach saurem oder schwach alkalischem Milieu statt, unter Bedingungen also, bei denen bevorzugt 1:2-Chromkomplexe entstehen.

Also Eisenverbindung dienen z.B. Eisen-II- oder Eisen-III-chlorid, -sulfat oder -nitrat. Die Einführung von Kobalt gelingt u.a. mit Kobaltacetat, einem Kobalt-Weinsäure-Komplex, Kobaltchlorid oder Kobaltsulfat. Zur Einführung Von Nickel verwendet man zweckmäßig Nickelchlorid, Nickelsulfat, Nickelacetat oder Nickelformiat.

Geeignete Kupfersalze sind Kupfercarbonat, Kupferchlorid, Kupfersulfat und Kupferacetat. Die Kupferung erfolgt im allgemeinen bei 80—100°C unter schwach sauren oder schwach alkalischen Bedingungen, vorzugsweise in Gegenwart von so viel Ammoniak, daß das Kupfersalz als Tetraminsalz gelöst ist.

Die Metallisierung findet vorzugsweise in Anwesenheit von Säureakzeptoren statt, beispielsweise von Carbonaten, Hydrogencarbonaten, Oxiden und Hydroxiden von Alkali- und Erdalkalimetallen, wie $Li_2CO_3$, $Na_2CO_3$, $K_2CO_3$, $LiHCO_3$, $KHCO_3$, LiOH, NaOH, KOH, MgO oder CaO oder von alkalisch wirkenden Salzen von Alkalimetallen, wie Natrium- oder Kaliumacetate, oder von Ammoniak oder niedrigalkylsubstituiertem Ammoniak. Die Säuregruppen der erfindungsgemäßen Metallkomplexfarbstoffe liegen vorzugsweise in Form von Salzen vor und zwar entsprechend den eingesetzten Säureakzeptoren vor allem in Form der Lithium-, Natrium-, Kalium-, Ammonium- oder Niederalkylammonium-Salze.

Unter den hier genannten Bedingungen entstehen die Chrom-, Eisen- und Kobaltkomplexe üblicherweise als 1:2-Komplexe und die Kupfer- und Nickelkomplexe als 1:1-Komplexe. Bei der Herstellung von Mischmetallkomplexen setzt man die erfindungsgemäßen Farbstoffe (I) vorzugsweise zuerst mit chrom-, eisen- oder kobaltabgebenden Mitteln um.und anschließend mit kupfer- oder nickelabgebenden Mitteln bis zur vollständigen Absättigung der komplexbildenden Gruppen.

In der Regel sind die Eisenkomplexe je nach Metallisierungsgrad grünstichig hellbraune bis dunkelbraune und die Kobaltkomplexe rotbraune Farbstoffe. Bei der Weitermetallisierung mit Kupfer- oder Nickelsalzen werden die Farbtöne im allgemeinen voller und wärmer. Die Chrommischkomplexe sind blaustichig dunkelbraune Farbstoffe.

Durch Variation der Metalle und des Verhältnisses der Metalle untereinander und zu den Farbstoffen (I) ist man in der Lage, eine nuancenmäßig weite Palette von mittelbraunen, dunkelbraunen und schwarzbraunen Farbstoffen zu erzeugen, wie sie bislang fast ausschließlich nur mit entsprechenden

Farbstoffen auf der Basis der zur Explosion neigenden Pikraminsäure — beispielsweise Acid Brown 75 (C.I. 34905) — erhältlich waren.

Die neuen Metallkomplexfarbstoffe können durch Sprühtrocknen, Walzentrocknung oder durch Ausfällen mit Elektrolyten, wie Natrium- oder Kaliumchlorid, isoliert werden. Sie eignen sich insbesondere zum Färben und Bedrucken stickstoffhaltiger Materialien, wie Seide, Wolle, synthetische Fasern aus Polyamiden oder Polyurethanen, und bevorzugt von Färben von Leder. In neutralem bis schwach saurem Färbedad bauen sie gut auf Leder auf, auch auf Ledern geringerer Affinität, wie Chromledern, die durch vegetabile oder synthetische Gerbstoffe nachbehandelt sind. Die Nuance der lichtechten und egalen Färbungen bleibt auf Ledern unterschiedlicher Gerbung konstant.

Aus der US—A—2 200 445 und der DE—C—670 935 sind Metallkomplexe von sauren Disazofarbstoffen bekannt, die sich von den Farbstoffen der vorliegenden Erfindung durch das Zentralatom oder einen Substituent unterscheiden.

Beispiel 1

15,4 g 4-Nitro-2-amino-1-hydroxybenzol werden in 100 ml Wasser und 14 ml 30 %iger Salzsäure gelöst und nach Zusatz von 100 g Eis im Verlauf von 15 Minuten mit 23 ml 4,35 n Natriumnitritlösung diazotiert. In der erhaltenen Lösung des Diazoniumsalzes wird überschüssige salpetrige Säure mit Amidosulfonsäure zerstört. 11 g Resorcin werden in 50 ml Wasser gelöst und mit 21 g Soda und 50 g Eis versetzt. In dieses Gemisch läßt man innerhalb von 30 Minuten möglichst gleichmäßig die Suspension des Diazoniumsalzes zulaufen. 29,5 g 6-Nitrodiazamidolsäure werden in 100 ml Wasser und 100 g Eis durch Zutropfen von ca. 17 ml 10 n Natronlauge bei pH 2 gelöst. Die Suspension des mittlerweile fertigen Monoazofarbstoffes wird mit der Lösung der 6-Nitrodiazamidolsäure versetzt und mit ca. 8 ml 10 n Natronlauge auf pH 9,5—10,0 gestellt. Das Gemisch rührt über Nacht und wird am nächsten Morgen, da noch geringe Mengen 6-Nitrodiazamidolsäure nachweisbar sind, 2 Stunden lang auf 50°C erwärmt. Nach beendeter Kupplung wird der Disazofarbstoff der Formel

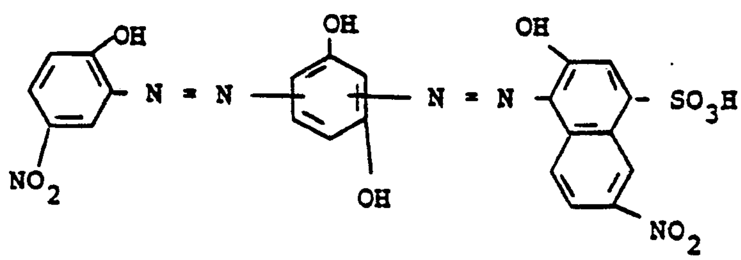

ohne Zwischenisolierung mit verschiedenen Metallsalzen zu den folgenden Metallkomplexfarbstoffen umgesetzt.

Kupferkomplex

Die Suspension des oben stehenden Farbstoffes wird mit wenigen ml Eisessig neutralisiert und nach Zugabe von 20 g $Cu(CH_3COO)_2 \cdot H_2O$ bei pH 5—4 eine Stunde lang auf 80°C erwärmt, bis keine Ausgangsverbindung mehr im Chromatogramm zu sehen ist. Der kupferhaltige Farbstoff wird durch einengen auf dem Wasserbad getrocknet und gemörsert. Er stellt ein braunes Pulver dar, welches Leder in lichtechten rotbraunen Tönen färbt.

Durch Reaktion mit 35 g $CU(CH_3COO)_2 \cdot H_2O$ erhält man ein braunes Pulver, welches Leder in gedeckteren rotbraunen Tönen färbt.

Nickelkomplex

Zweistündiges Metallisieren mit 24,9 g $Ni(CH_3COO)_2 \cdot 4H_2O$ bei 70°C und pH 6,5 ergeben einen Nickel-1:1-Komplex, welcher Leder in klaren rotbraunen Tönen färbt.

Kobaltkomplex

Die Suspension des in diesem Beispiel angegebenen Farbstoffes wird mit 15 g $CoSO_4 \cdot 7H_2O$ versetzt und zwei Stunden lang bei 70°C und pH 8,5—9,0 gerührt. Nach Einengen der Suspension im Sprühtrockner erhält man ein braunes Pulver, das Leder in blaustichig rotbraunen Tönen färbt. Bei Verwendung von 28 g $CoSO_4 \cdot 7H_2O$ erhält man lichtechte Färbungen in dunkleren Tönen.

Kobaltkupferkomplex

Der Disazofarbstoff wird erst zwei Stunden lang mit 12,25 g $CoSO_4 \cdot 7H_2O$ bei 70°C und pH 8,5—9,0 behandelt. Nach Zugabe von etwas Eisessig bis pH 7 wird eine Stunde lang mit 19 g $Cu(CH_3COO)_2 \cdot H_2O$ auf 80°C erwärmt. Der entstandene Kobaltkupferkomplex stellt in getrocknetem Zustand ein braunes Pulver dar, welches Leder in violettbraunen Tönen färbt.

Eisenkomplex

Die den Disazofarbstoff enthaltende Suspension wird mit 27 g $FeCl_3 \cdot 6H_2O$ und 25 g wasserfreiem Natriumacetat versetzt und 2 Stunden lang bei 80°C gerührt. Das eisenhaltige Reaktionsprodukt wird durch Einengen auf dem Wasserbad isoliert. Es fällt als dunkelbraunes Pulver an, welches Leder in echten dunklen grünstichig braunen Tönen färbt.

Kupfereisenkomplex

Die mit Eisessig Neutral gestellte Suspension wird zunächst mit 10 g $Cu(CH_3COO)_2 \cdot H_2O$ durch zweistündiges Erhitzen auf 80°C angekupfert. Das noch metallfreien Farbstoff enthaltende Gemisch wird dann zwei Stunden lang mit 27 g $FeCl_3 \cdot 6H_2O$ und 25 g wasserfreiem Natriumacetat bei 80°C nachbehandelt. Das kupfer- und eisenhaltige Produkt stellt nach dem Sprühtrocknen ein dunkles Pulver dar, welches Leder in dunkelbraunen Tönen färbt.

Chromkupferkomples

Das Kupplungsprodukt wird mit Eisessig neutralisiert und in Gegenwart von 45 g einer wäßrigen Lösung von basischem Chromacetat (10,5 Gew.-% $Cr_2O_3$) fünf Stunden unter Rückfluß gekocht. Man läßt die Temperatur auf 80°C absinken, setzt 12 g $Cu(CH_3COO)_2 \cdot H_2O$ zu und hält das Gemisch weitere zwei Stunden auf 80°C. Der entstandene Chromkupferkomplex bildet beim Eindunsten auf dem Wasserbad ein schwarzbraunes Pulver, welches Leder in echten blaustichig schwarzbraunen Nuancen färbt.

Verwendet man zur Metallisierung 36 g einer wäßrigen basischen Chromacetat-Lösung (10,5 Gew.-% $Cr_2O_3$) und 14 g $Cu(CH_3COO)_2 \cdot H_2O$, so erzielt man dunkelbraune bis schwarzbraune Lederfärbungen mit einem geringeren Blaustich.

Chromnickelkomplex

Das Kupplunsprodukt wird nach Neutralisieren mit Eisessig zunächst wieder 5 Stunden lang mit 36 g einer wäßrigen basischen Chromacetatlösung (10,5 Gew.-% $Cr_2O_{32}$) unter Rückfluß gekocht. Es folgt die Behandlung mit 17,4 g $Ni(CH_3COO)_2 \cdot 4H_2O$ bei 80°C. Der beim Sprühtrocknen gewonnene chrom- und nickelhaltige Komplexfarbstoff ist ein schwarzbraunes Pulver, das auf Leder dunkelrotbraune Färbungen liefert.

Chromeisenkomplex

Die den Diazofarbstoff enthaltende Suspension wird mit Eisessig neutralisiert und mit 9,0 g einer wäßrigen Lösung von basischem Chromacetat (10,5 Gew.-% $Cr_2O_3$) versetzt. Man kocht das Gemisch 5 Stunden unter Rückfluß, läßt dan die Temperatur auf 80°C absinken, fügt 20,25 g $FeCl_3$. $6H_2O$ und 18,75 g wasserfreies Natriumacetat zu und rührt das Ganze 2 Stunden lang bei 80°C. Das chromund eisenhaltige Reaktionsprodukt wird durch Eindunsten auf dem Wasserbad getrocknet. Es stellt nach dem Mörsern ein schwarzbraunes Pulver dar, welches Leder in echten dunkelbraunen Tönen färbt.

Beispiel 2

Durch Umsetzung von 14,35 g diazotiertem 4-Chlor-2-amino-1-hydroxybenzol mit 11 g Resorcin und nachfolgende Reaktion mit 29,5 g 6-Nitrodiazamidolsäure erhält man den Disazofarbstoff der Formel

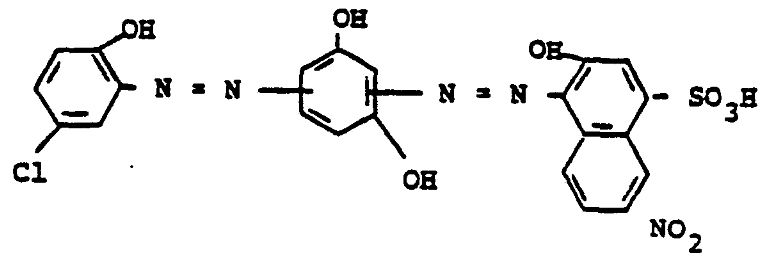

Seine Kupfer-, Nickel-, Kobalt-, Kobaltkupfer-, Eisen-, Chromeisen-, Kupfereisen-, Chromkupfer- und Chromnickel- Komplexe geben auf Leder Färbungen mit ähnlichen Nuancen wie die entsprechenden Metallkomplexe des unter Beispiel 1 stehenden Disazofarbstoffes.

Beispiel 3

Aus 15,4 g 5-Nitro-2-amino-1-hydroxybenzol, 11 g Resorcin und 29,5 g 6-Nitrodiazamidolsäure wird der Disazofarbstoff der Formel

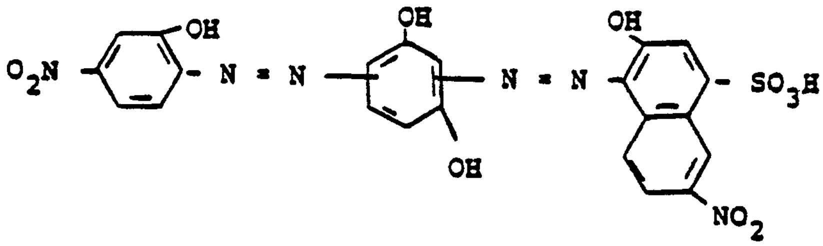

hergestellt. Seine Metallkomplexe weisen stets dunklere, zum Teil blaustichigere Färbungen auf Leder auf als die mit analogen Mengen Metallisierungsmitteln gewonnenen Metallderivate des Disazofarbstoffes des Beispiels 1.

Durch Diazotierung der im folgenden angegebenen 2-Amino-1-hydroxybenzole, Kupplung ihrer Diazoniumsalze auf Resorcin und weitere Reaktion mit 6-Nitrodiazamidolsäure gelangt man zu den Disazofarbstoffen der Formel

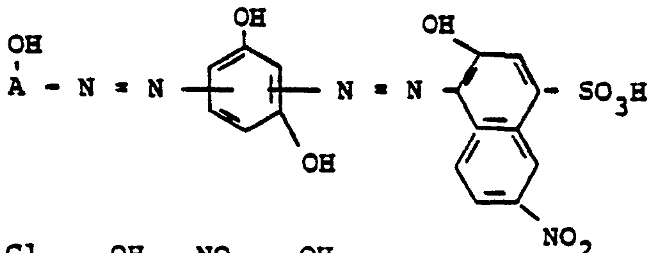

$\overset{OH}{\overset{|}{A}}$ – = 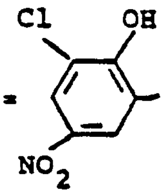 , 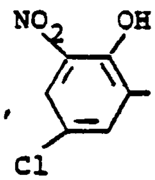 , 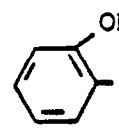 , 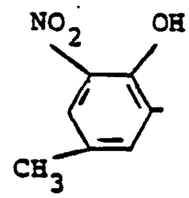 ,

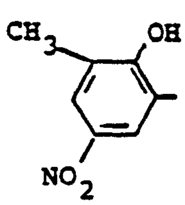 , 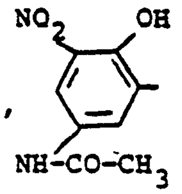 , 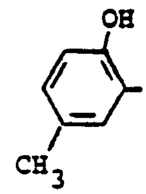 , 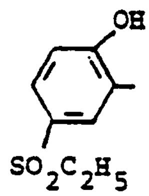 ,

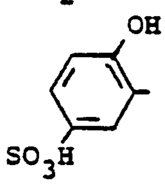 , 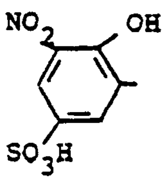 , 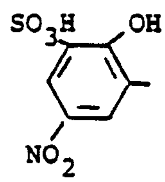 ,

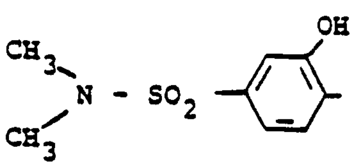 , 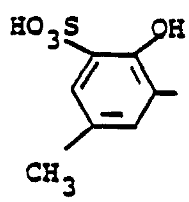 .

Die Kupfer-, Nickel- und Kobalt-Komplexe dieser Disazofarbstoffe geben im allgemeinen rotbraune Lederfärbungen; die Lederfärbungen der Eisenkomplexe sind meist dunkelbraun und die der Chromkupfer-, Chromnickel- und Chromeisenkomplexe meist blaustichig dunkelbraun.

**Patentansprüche**

1. Eisen-, Nickel-, Kobalt- oder Kupferkomplexe sowie deren Mischmetallkomplexe von Disazofarbstoffen der Formel

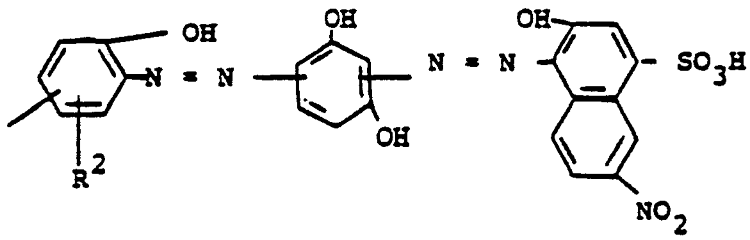

(I)

worin
$R^1$ Wasserstoff, $NO_2$ oder Acylamino und
$R^2$ Wasserstoff, Cl, Alkyl, Alkoxy, Sulfamoyl-, Alkylsulfonyl, Arylsulfonyl, Acylamino oder $SO_3H$
bedeuten, wobei die genannten Sulfamoyl-, Alkyl-, Alkoxy- und Arylreste in der Chemie der Komplexfarbstoffe übliche Substituenten tragen können.

2. Komplexfarbstoffe gemäß Anspruch 1 der Formel

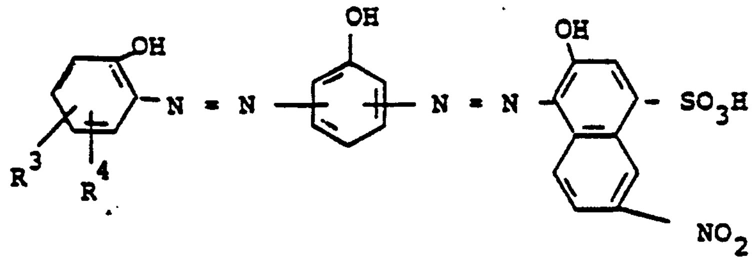

(II)

worin
$R_3$ Wasserstoff, $CH_3CONH$ oder $NO_2$ und
$R_4$ Wasserstoff, Cl, $CH_3$, $OCH_3$, $SO_3H$, $CH_3CONH$, $SO_2NH_2$, $C_1$—$C_2$-Alkylsulfonyl oder ($C_1$—$C_2$-Alkyl)$_2$-Sulfamoyl bedeuten, wobei $R^4$ für Wasserstoff steht, wenn $R^3$ $CH_3CONH$ bedeutet.

3. Komplexfarbstoffe gemäß Anspruch 1 oder 2, dadurch gekennzeichnet, daß $R^1$ bzw. $R^3$ für H oder $NO_2$ und $R^2$ bzw. $R^4$ für H oder Cl stehen.

4. Komplexfarbstoffe gemäß Anspruch 1 oder 2, dadurch gekennzeichnet, daß $R^1$ bzw. $R^3$ für $NO_2$, $R^2$ bzw. $R^4$ für H stehen.

5. Komplexfarbstoffe gemäß Ansprüchen 1—4, dadurch gekennzeichnet, daß sie als Mischkomplexe von Eisen oder Kobalt mit Kupfer oder Nickel vorliegen.

6. Komplexfarbstoffe gemäß Ansprüchen 1—4, dadurch gekennzeichnet, daß sie als Mischkomplexe von Nickel, Eisen oder Kupfer mit Chrom vorliegen.

7. Verfahren zur Herstellung von Komplexfarbstoffen gemäß Anspruch 1, dadurch gekennzeichnet, daß man Resorcin in beliebiger Reihenfolge mit einem Mol diazotierter 1-Amino-2-hydroxy-6-nitronaphthalin-4-sulfonsäure und einem Mol eines diazotierten Amins

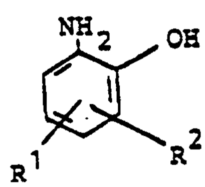

(III)

kuppelt und anschließend den erhaltenen Disazofarbstoffe ein- oder zweimal metallisiert.

8. Verfahren zum Färben von stickstoffhaltigen Materialien, insbesondere Leder, dadurch gekennzeichnet, daß man Farbstoffe gemäß Ansprüchen 1—6 verwendet.

**Claims**

1. Iron, nickel, cobalt or copper complexes and their mixed metal complexes of disazo dyestuffs of the formula

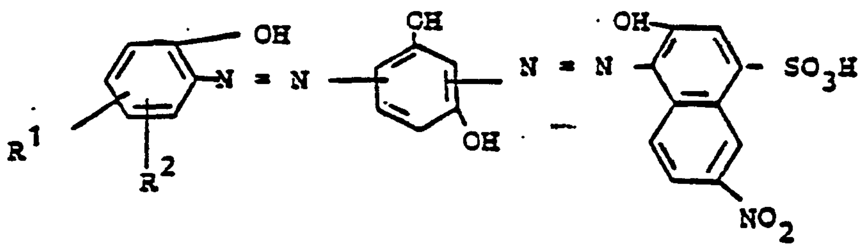

(I)

wherein
$R^1$ denotes hydrogen, $NO_2$ or acylamino and
$R^2$ denotes hydrogen, Cl, alkyl, alkoxy, sulphamoyl, alkylsulphonyl, arylsulphonyl, acylamino or $SO_3H$ and the sulphamoyl, alkyl, alkoxy and aryl radicals mentioned can carry substituents customary in the chemistry of complex dyestuffs.

2. Complex dyestuffs according to Claim 1 of the formula

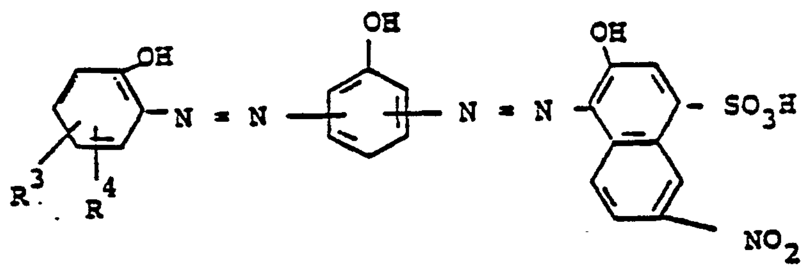

(II)

wherein
$R^3$ denotes hydrogen, $CH_3CONH$ or $NO_2$ and
$R^4$ denotes hydrogen, Cl, $CH_3$, $OCH_3$, $SO_3H$, $CH_3CONH$, $SO_2NH_2$, $C_1$—$C_2$-alkylsulphonyl or ($C_1$—$C_2$-alkyl)$_2$-sulphamoyl and $R_4$ represents hydrogen when $R^3$ denotes $CH_3CONH$.

3. Complex dyestuffs according to Claim 1 or 2, characterised in that $R^1$ or $R^3$ represent H or $NO_2$ and $R^2$ or $R^4$ represent H or Cl.

4. Complex dyestuffs according to Claim 1 or 2, characterised in that $R^1$ or $R^3$ represent $NO_2$ and $R^2$ or $R^4$ represent H.

5. Complex dyestuffs according to Claims 1—4, characterised in that they are present as mixed complexes of iron or cobalt with copper or nickel.

6. Complex dyestuffs according to Claims 1—4, characterised in that they are present as mixed complexes of nickel, iron or copper with chromium.

7. Process for preparing complex dyestuffs according to Claim 1, characterised in that, in any order, resorcinol is coupled with one mol of diazotised 1-amino-2-hydroxy-6-nitronaphthalene-4-sulphonic acid and one mol of a diazotised amine

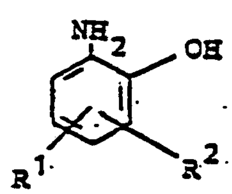

(III)

and the resulting disazo dyestuffs are then metallised once or twice.

8. Process for dyeing nitrogen-containing materials, in particular leather, characterised in that dyestuffs according to Claims 1—6 are used.

**Revendications**

1. Complexes de fer, de nickel, de cobalt ou de cuivre ainsi que complexes métalliques mixtes de colorants disazoïques de formule

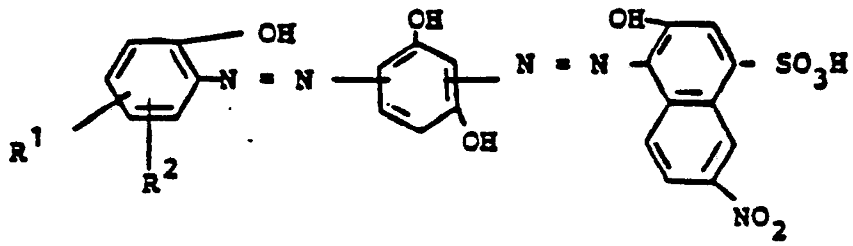

(I)

dans laquelle
$R^1$ représente l'hydrogène, $NO_2$ ou un reste acylamino et
$R^2$ représente l'hydrogène, Cl, un reste alkyle, alkoxy, sulfamoyle, alkylsulfonyle, arylsulfonyle, acylamino ou $SO_3H$,
les restes sulfamoyle, alkyle, alkoxy et aryle mentionnés pouvant porter des substituants classiques dans la chimie des colorants complexes.

2. Colorants complexes suivant la revendication 1, de formule

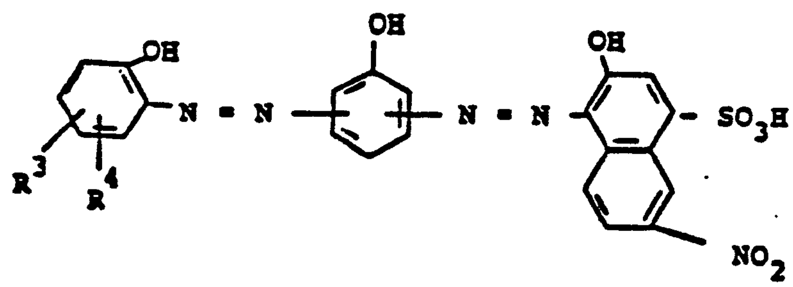

(II)

dans laquelle
$R^3$ représente l'hydrogène, $CH_3CONH$ ou $NO_2$ et
$R^4$ est l'hydrogène, Cl, $CH_3$, $OCH_3$, $SO_3H$, $CH_3CONH$, $SO_2NH_2$, un reste alkylsulfonyle en $C_1$ ou $C_2$ ou un reste (alkyle en $C_1$ ou $C_2$)-$_2$-sulfamoyle, $R^4$ représentant l'hydrogène lorsque $R^3$ désigne le groupe $CH_3CONH$.

3. Colorants complexes suivant la revendication 1 ou 2, caractérisés en ce que $R^1$ ou respectivement $R^3$ représente H ou $NO_2$ et $R^2$ ou respectivement $R^4$ représente H ou Cl.

4. Colorants complexes suivant la revendication 1 ou 2, caractérisés en ce que $R^1$ ou respectivement $R^3$ représente $NO_2$, $R^2$ ou respectivement $R^4$ représente H.

5. Colorants complexes suivant les revendications 1—4, caractérisés en ce qu'ils se présentent comme complexes mixtes de fer ou de cobalt avec du cuivre ou du nickel.

6. Colorants complexes suivant les revendications 1—4, caractérisés en ce qu'ils se présentent comme complexes mixtes de nickel, fer ou cuivre avec du chrome.

7. Procédé de production de colorants complexes suivant la revendication 1, caractérisé en ce qu'on fait copuler du résorcinol dans un ordre quelconque avec 1 mole d'acide 1-amino-2-hydroxy-6-nitronaphtalène-4-sulfonique diazoté et une mole d'une amino diazotée

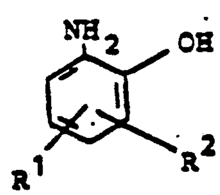

(III)

puis on effectue une ou deux fois la métallation des colorants disazoïques obtenus.

8. Procédé de teinture de matières contenant de l'azote, notamment de cuir, caractérisé en ce qu'on utilise des colorants suivant les revendications 1—6.